# EUROPÄISCHE PATENTSCHRIFT

(11) **EP 0 843 161 B1**
(45) Veröffentlichungstag und Bekanntmachung des Hinweises auf die Patenterteilung: **16.03.2005**
(21) Anmeldenummer: 97119508.6
(22) Anmeldetag: 07.11.1997
(51) Int. Cl.: G01F 11/02

(54) **Flaschenaufsatzdispenser**
Dispenser adapted for a bottle
Distributeur montable sur une bouteille

(30) Priorität: 16.11.1996 DE 19647491
(43) Veröffentlichungstag der Anmeldung: 20.05.1998
(73) Patentinhaber: BRAND GMBH + CO KG, 97877 Wertheim (DE)
(72) Erfinder: Rempt, Renate, 97877 Wertheim-Nassig (DE)
(74) Vertreter: Gesthuysen, von Rohr & Eggert

(56) Entgegenhaltungen:
- EP-A- 0 086 912
- EP-A- 0 339 614
- US-A- 4 074 831
- US-A- 4 159 784

## Beschreibung

Die Erfindung betrifft einen Flaschenaufsatzdispenser mit einer digitalen Volumenanzeige mit den Merkmalen des Oberbegriffs von Anspruch 1.

Der bekannte Flaschenaufsatzdispenser, von dem die Erfindung ausgeht (US 4,159,784 A) hat zur digitalen Volumenanzeige ein mechanisches Zählwerk, das mit einem als Begrenzer des Kolben-Zylinder-Hubs dienenden Verstellanschlag über ein mechanisches Getriebe verbunden ist. Die Getriebeverbindung ist starr. Für den Benutzer besteht daher nicht die Möglichkeit, den Dispenser zu justieren, um das angezeigte und das tatsächlich ausgegebene Flüssigkeitsvolumen in Übereinstimmung zur bringen. Allerdings ist eine Nullpunkteinstellung des Begrenzers, der seinerseits einen Festanschlag und einen Verstellanschlag aufweist, dadurch vorgesehen, daß die Lage des Festanschlags mittels einer Kalibrierschraube geringfügig und dauerhaft verändert werden kann. An der festen Getriebeverbindung der Volumenanzeige mit dem Verstellanschlag des Begrenzers ändert sich dadurch nichts.

Bekannt ist ferner ein Flaschenaufsatzdispenser (US 4,074,831 A), bei dem der Verstellanschlag mit dem Kolben mittels einer Zahnstange verbunden ist. Der Verstellanschlag kann also in Stufen eingestellt werden. Eine Nullpunktverstellung erfolgt hier durch eine Justierschraube, die am dem Zylinder zugeordneten festen Gegenanschlag angeordnet ist und den Anschlagpunkt des Verstellanschlags am Kolben minimal zu verändern erlaubt.

Der Lehre liegt das Problem zugrunde, den eingangs erläuterten Flaschenaufsatzdispenser mit digitaler Volumenanzeige so auszugestalten, daßdas angezeigte und das tatsächlich ausgegebene Volumen durch Justierung in Übereinstimmung gebracht werden können.

Das zuvor aufgezeigte Problem wird bei einem Flaschenaufsatzdispenser mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Wesentlich ist, daß bei dem Flaschenaufsatzdispenser Begrenzer und Volumenanzeige voneinander entkoppelbar sind. Dann, wenn die Volumenanzeige von dem Begrenzer entkoppelt ist, ist sie als solche veränderbar, ohne daß sich die Begrenzereinstellung ändert. Das erlaubt es, das angezeigte Volumen durch Justierung der Volumenanzeige mit dem von der Begrenzereinstellung abhängigen, tatsächlich ausgegebenen Volumen ohne weiteres in Übereinstimmung zu bringen.

Der Begriff "Begrenzer" soll wohlgemerkt nicht auf einen Verstellanschlag beschränkt sein, sondern jedwedes Funktionselement bezeichnen, das die maximale axiale Ein- und Ausfahrhubstrecke von Kolben und Zylinder relativ zueinander in der einen Richtung oder anderen Richtung oder beiden Richtungen begrenzt. Der Begrenzer ist also ein Hubstreckenbegrenzer.

Bei einer bevorzugten Ausführungsform wirkt der Begrenzer mechanisch. Ebenso erfolgt die Volumenanzeige mechanisch. Zwischen Begrenzer und Volumenanzeige besteht eine mechanische Getriebeverbindung, die sich zur Justierung entkoppeln und wieder koppeln läßt.

Wohlgemerkt ist die Erfindung nicht auf diese mechanische Variante beschränkt. Der Begrenzer für den maximalen Hub von Kolben und Zylinder kann auch elektrisch, elektronisch, optisch oder akustisch wirken und seine Einstellung elektrisch, elektronisch, optisch oder akustisch erfaßt und digital zur Anzeige gebracht werden. Die Justierung in einem voneinander unabhängigen Zustand von Begrenzer und digitaler Volumenanzeige ist demgemäß auch elektrisch, elektronisch, optisch oder akustisch zu verstehen. Insbesondere soll hier der Fall eingeschlossen sein, eine elektronische Volumenanzeige auf das tatsächlich ausgegebene Volumen nachzujustieren, indem der Anzeigewert per Dateneingabe z. B. über eine Tastatur verändert wird, ohne daß es einer mechanischen Entkopplung von Begrenzer und Volumenanzeige bedürfte, da diese gar nicht mechanisch gekoppelt sind.

In der mechanischen Variante weist der Begrenzer vorzugsweise einen ersten Anschlag, der den Kolben-Zylinder-Hub beim Ansaugen begrenzt, und einen zweiten Anschlag auf, der den Kolben-Zylinder-Hub beim Ausgeben begrenzt. Zur Justierung kann sich im entkoppelten Zustand von Begrenzer und Volumenanzeige der erste Anschlag oder der zweite Anschlag oder die Volumenanzeige verstellen lassen.

Bei einer bevorzugten Ausführungsform ist einer der Anschläge ein Verstellanschlag zur Volumenverstellung. Zur Justierung wird im entkoppelten Zustand von Begrenzer und Volumenanzeige der Verstellanschlag festgehalten und die Volumenanzeige verstellt. Das ist besonders praktisch, da der Benutzer das tatsächlich ausgegebene Volumen messen und in nur einem Schritt die Volumenanzeige entsprechend einstellen kann. Durch das Festhalten des Verstellanschlags ist sichergestellt, daß sich an dessen Einstellung beim Justieren nichts ändert. Es wird also nur die Volumenanzeige an das tatsächlich ausgegebene Volumen angeglichen.

Bei einer bevorzugten Ausführungsform hat der Dispenser zur Volumenverstellung einen Drehknopf, an dem ein Zahnkranz angeordnet ist. Die Volumenanzeige befindet sich hinter einer Schließe, die zur Justierung geöffnet werden muß. Beim Öffnen der Schließe fährt eine daran sitzende Nase o. ä. in den Zahnkranz des Drehknopfes ein, um diesen zu blockieren.

Bei einer bevorzugten Ausführungsform erfolgt die Volumenanzeige mittels eines Zählwerks, dessen Zählwerkswelle über ein Kegelzahnradgetriebe an eine Gewindespindel angekoppelt ist, die einer der Begrenzereinstellung proportionalen Drehung unterliegt. Die Zählwerkswelle ist durch ein lösbares Distanzstück in Eingriffstellung der Kegelzahnräder blockiert. Sie läßt sich nach Lösen des Distanzstücks außer Eingriff der Kegelzahnräder rücken und an einem Stellknopf drehen.

Bei einer bevorzugten Ausführungsform weist der Dispenser eine Plombe auf, die beim ersten Justieren gebrochen wird. Nach dem Brechen der Plombe soll eine auffällige Markierung in dem Volumenanzeigefeld des Dispenser sichtbar werden, um dem Benutzer zu signalisieren, daß die Volumenanzeige von der herstellerseitigen Grundjustierung abweicht, für die es eine Konformitätsbescheinigung gibt. Das ist unter anderem für eventuelle Gewährleistungsansprüche von Bedeutung.

Bei einer bevorzugten Ausführungsform ist das Distanzstück mit einem Kunststoffstreifen gesichert, der beim ersten Lösen des Distanzstücks abgerissen wird und die Markierung sichtbar werden läßt.

Bei einer bevorzugten Ausführungsform befindet sich der Kunststoffstreifen in dem Volumenanzeigefeld vor dem Distanzstück, so daß er dieses verdeckt. Nach dem Abreißen des Kunststoffstreifens wird das Distanzstück selbst als Markierung sichtbar. Um die gewünschte Signalwirkung zu erzielen, besteht das Distanxstück vorzugsweise aus einem Material, dessen Farbe sich von der des Volumenanzeigefelds und Kunststoffstreifens deutlich unterscheidet.

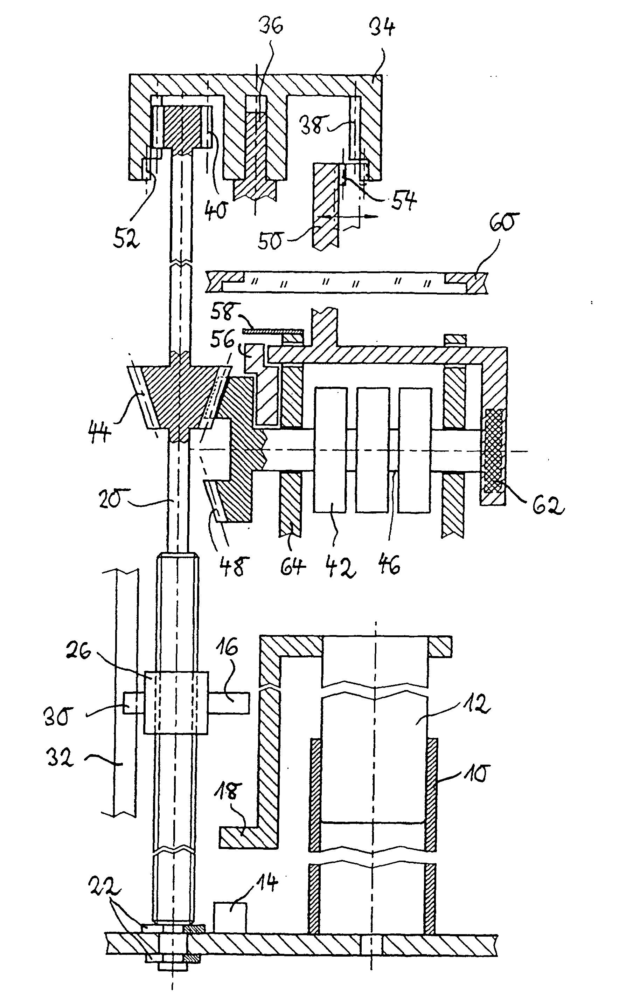

Die Erfindung wird im folgenden anhand eines in der Zeichnung dargestellten Ausführungsbeispiels näher erläutert. Gezeigt ist das Funktionsschema eines Flaschenaufsatzdispensers, teilweise im Schnitt.

Der Flaschenaufsatzdispenser hat einen Zylinder 10 und einen darin axial verschieblich angeordneten Kolben 12. Beim Ausfahren des Kolbens 12 aus dem Zylinder 10 wird Flüssigkeit aus einer Flasche, auf der der Dispenser sitzt, in den Zylinder 10 angesaugt. Beim Einfahren des Kolbens 12 in den Zylinder 10 wird Flüssigkeit aus dem Zylinder 10 hin zu einem Auslaß befördert und ausgegeben. Die Kolbenbewegung erfolgt von Hand. Es ist ein bestimmter Stellhub des Kolbens 12 vorgegeben, der dem gewünschten Ausgabevolumen von Flüssigkeit entspricht.

Der Stellhub des Kolbens 12 ist durch Anschläge 14, 16 begrenzt, die mit einem an dem Kolben 12 fest angebrachten Gegenanschlag 18 zusammenwirken. Der das Einfahren des Kolbens 12 in den Zylinder 10 zwecks Ausgebens von Flüssigkeit begrenzende Anschlag 14 ist ein mit dem Zylinder 10 verbundener Festanschlag 14. Der das Ausfahren des Kolbens 12 aus dem Zylinder 10 zwecks Ansaugens von Flüssigkeit begrenzende Anschlag 16 ist ein Verstellanschlag, zu dessen Verstellung und somit Verstellung des Ausgabevolumens eine Gewindespindel 20 dient.

Die Gewindespindel 20 erstreckt sich parallel zu der Zylinderachse. Sie ist in axial fester Position bezüglich des Zylinders 10 drehbar gelagert 22. Die Gewindespindel 20 hat ein Außengewinde. Der Verstellanschlag 16 ist mit einer Gewindebuchse 26, die ein passendes Innengewinde hat, auf die Gewindespindel 20 aufgeschraubt und verdrehsicher 30 geführt 32. Der Verstellanschlag 16 wird durch Drehen der Gewindespindel 20 axial verstellt.

Zum Drehen der Gewindespindel 20 und somit Verstellen des Ausgabevolumens dient ein Drehknopf 34 am oberen Ende der Gewindespindel 20. Der Drehknopf 34 hat eine zylindrische Topfform mit Öffnung nach unten. Er ist um eine mittige Zylinderachse 36 drehbar gelagert und hat an seinem Innenmantel eine axiale Verzahnung 38, die mit einer entsprechenden axialen Verzahnung 40 am oberen Ende der Gewindespindel 20 kämmt. Die handbetätigte Drehung des Drehknopfes 34 wird in eine schnelle Drehung der Gewindespindel 20 übersetzt.

Der Dispenser hat eine digitale Volumenanzeige mittels eines Zählwerks 42, das über ein Getriebe an die Gewindespindel 20 gekoppelt ist. Das Getriebe ist ein Kegelzahnradgetriebe.

An der Gewindespindel 20 sitzt starr ein erstes Kegelzahnrad 44, und an der Zählwerkswelle 46 starr ein zweites Kegelzahnrad 48, zwischen denen eine normalerweise starre drehmomentübertragende Verbindung besteht. Wird der Drehknopf 34 gedreht und der Verstellanschlag 16 und somit das Ausgabevolumen des Dispenser verstellt, so erfolgt eine proportionale Verstellung des Zählwerks 42 zur Anzeige des Ausgabevolumens.

Der Dispenser hat herstellerseitig eine Grundjustierung, bei der das angezeigte und tatsächlich ausgegebene Flüssigkeitsvolumen für entionisiertes Wasser unter Normalbedingungen übereinstimmen. Dafür liegt eine Konformitätsbescheinigung des Herstellers vor.

Unter bestimmten Umständen, z. B. beim Ausgeben von Flüssigkeiten mit von Wasser stark abweichender Viskosität, können sich aber Abweichungen zwischen dem angezeigten und dem tatsächlich ausgegebenen Flüssigkeitsvolumen einstellen. Der Benutzer hat dann die Möglichkeit, den Dispenser nachzujustieren, um wieder Übereinstimmung zwischen dem angezeigten und dem tatsächlich ausgegebenen Flüssigkeitsvolumen herzustellen. Das Nachjustieren besteht darin, daß der Benutzer das tatsächlich ausgegebene Flüssigkeitsvolumen mißt und die Volumenanzeige mit dem Meßwert abgleicht.

Um zum Nachjustieren auf das Zählwerk 42 zugreifen zu können, muß der Benutzer einen Schieber 50 öffnen. Der Drehknopf 34 hat unten am Innenmantel einen Zahnkranz 52, und der Schieber 50 eine Nase 54, die in den Zahnkranz 52 einfährt und dadurch den Drehknopf 34 blockiert. Es ist so sichergestellt, daß der Drehknopf 34 und der Verstellanschlag 16 während des Justiervorgangs keine Positionsänderung erfahren.

Bei geöffnetem Schieber 50 wird ein Distanzstück 56 zugänglich, das das Kegelzahnrad 48 an der Zählwerkswelle 46 in Eingriff mit dem Kegelzahnrad 44 an der Gewindespindel 20 blockiert. Das Distanzstück 56 besteht aus farbigem Kunststoff. Es liegt hinter einem als Plombe dienenden dünnen Kunststoffstreifen 58, der an einem der Lagerböcke 64 für die Zählwerkswelle 46 befestigt ist und das Distanzstück 56 verdeckt.

Der Kunststoffstreifen 58 nimmt eine das Distanzstück 56 verdeckende Position hinter einem Fenster 60 ein, durch das die Volumenanzeige des Zählwerks 42 sichtbar ist. Beim ersten Abziehen des Distanzstücks 56 von der Zählwerkswelle 46 wird der Kunststoffstreifen 58 abgerissen und das farbige Distanzstück 56 durch das Fenster 60 sichtbar.

Bei geöffnetem Schieber 50 wird ein an der Zählwerkswelle 46 sitzender Stellknopf 62 zugänglich, auf den bei geschlossenem Schieber 50 kein Zugriff möglich ist. Nach Abziehen des Distanzstücks 56 kann die Zählwerkswelle 46 außer Eingriff der Kegelzahnräder 44, 48 gerückt und an dem Stellknopf 62 verstellt werden, um die Volumenanzeige mit dem vom Benutzer gemessenen, tatsächlich ausgegebenen Flüssigkeitsvolumen in Übereinstimmung zu bringen. Sodann wird die Zählwerkswelle 46 in Wiedereingriff der Kegelzahnräder 44, 48 gerückt und das Distanzstück 56 wieder angebracht.

Das als farbige Markierung im Anzeigefeld des Dispensers sichtbar gewordene Distanzstück 56 läßt den Benutzer auf den ersten Blick erkennen, daß er es mit einem nachjustierten Dispenser zu tun hat, dessen Volumenanzeige von der herstellerseitigen Grundjustierung abweicht.

### Liste der Bezugszeichen

- 10: Zylinder
- 12: Kolben
- 14: Festanschlag
- 16: Verstellanschlag
- 18: Gegenanschlag
- 20: Gewindespindel
- 22: Lager
- 26: Gewindebuchse
- 30: Verdrehsicherung
- 32: Führung
- 34: Drehknopf
- 36: Zylinderachse
- 38: Verzahnung
- 40: Verzahnung
- 42: Zählwerk
- 44: Kegelzahnrad
- 46: Zählwerkswelle
- 48: Kegelzahnrad
- 50: Schieber
- 52: Zahnkranz
- 54: Nase
- 56: Distanzstück
- 58: Kunststoffstreifen
- 60: Fenster
- 62: Stellknopf
- 64: Lagerbock

## Patentansprüche

1. Flaschenaufsatzdispenser mit einer Kolben-Zylinder-Einheit, deren Kolben (12) und Zylinder (10) in einer axialen Hubbewegung relativ zueinander betätigbar sind, um Flüssigkeit aus einer Flasche, auf der der Dispenser sitzt, anzusaugen und auszugeben, mit einem einstellbaren Begrenzer für den maximalen Hub von Kolben (12) und Zylinder (10) relativ zueinander, mit einem Stellelement (34) zum Ändern der Begrenzereinstellung und mit einer digitalen Volumenanzeige (42), die bei Änderung der Begrenzereinstellung selbsttätig proportional dazu mit geändert wird,
**dadurch gekennzeichnet,**
**daß** Begrenzer (14, 16) und Volumenanzeige (42) voneinander entkoppelbar sind und daß die Volumenanzeige (42) in ihrem von dem Begrenzer (14, 16) entkoppelten Zustand veränderbar ist, ohne daß sich die Begrenzereinstellung ändert, um so das angezeigte und das tatsächlich ausgegebene Volumen in Übereinstimmung zu bringen.

2. Flaschenaufsatzdispenser nach Anspruch 1, dadurch gekenntzeichnet, daß die Volumenanzeige (42) in ihrem von dem Begrenzer (14, 16) entkoppelten Zustand electronisch per Dateneingabe veränderbar ist.

3. Flaschenaufsatzdispenser nach Anspruch 1 oder 2, **dadurch gekennzeichnet, daß** der Begrenzer (14, 16) mechanisch wirkt, daß die Volumenanzeige(42) mechanisch erfolgt, und daß zwischen Begrenzer (14, 16) und Volumenanzeige(42) eine entkoppelbare und wieder koppelbare mechanische Getriebeverbindung (44, 4b, 48) besteht.

4. Flaschenaufsatzdispenser nach einem der Anspruche 1 bis 3, **dadurch gekennzeichnet, daß** der Begrenzer (14, 16) einen Verstellanschlag (16) zur Volumenverstellung aufweist und daß zur Justierung im entkoppelten Zustand von Begrenzer (14, 16) und Volumenanzeige (42) der Verstellanschlag (16) festgehalten wird, während die Volumenanzeige (42) unabhängig verstellbar ist.

5. Flaschenaufsatzdispenser nach Anspruch 4, **dadurch gekennzeichnet, daß** zur Volumenverstellung ein Drehknopf (34) vorgesehen ist, an dem ein Zahnkranz (52) angeordnet ist, daß sich die Volumenanzeige (42) hinter einer Schließe (50) befindet, die zur Justierung geöffnet werden muß, und daß beim Öffnen der Schließe (50) eine daran sitzende Nase (54) o. ä. in den Zahnkranz (52) einfährt und den Drehknopf (34) blockiert.

6. Flaschenaufsatzdispenser nach Anspruch 3 und ggf. Anspruch 4 oder 5, **dadurch gekennzeichnet, daß** die Volumenanzeige (42) als Zählwerk ausgeführt ist, dessen Zählwerkswelle (46) über ein Kegelzahnradgetriebe (44, 48) an eine Gewindespindel (20) angekoppelt ist, die einer der Begrenzereinstellung proportionalen Drehung unterliegt, und daß die Zählwerkswelle (46) durch ein lösbares Distanzstück (56) in Eingriffsstellung das Kegelzahnrad (44, 48) blockiert und nach Lösen des Distanzstücks (56) außer Eingriff der Kegelzahnräder (44, 48) rückbar und an einem Stellknopf (62) drehbar ist.

7. Flaschenaufsatzdispenser nach einem der Ansprüche 1 bis 6, **dadurch gekennzeichnet, daß** eine Plombe (58) vorgesehen ist, die beim ersten Justieren gebrochen wird.

8. Flaschenaufsatzdispenser nach Anspruch 7, **dadurch gekennzeichnet, daß** nach dem Brechen der Plombe (58) eine auffällige Markierung in der Volumenanzeige (42) sichtbar wird.

9. Flaschenaufsatzdispenser nach den Ansprüchen 6 bis 8, **dadurch gekennzeichnet, daß** das Distanzstück (56) mit einem Kunststoffstreifen (58) gesichert ist, der beim ersten Lösen des Distanzstücks (56) abgerissen wird und die Markierung sichtbar werden läßt.

10. Flaschenaufsatzdispenser nach Anspruch 9, **dadurch gekennzeichnet, daß** sich der Kunststoffstreifen (58) in der Volumenanzeige (42) vor dem Distanzstück (56) befindet und dieses verdeckt und nach dem Abreißen das Distanzstück (56) selbst als Markierung sichtbar werden läßt.

## Claims

1. A dispensing bottle cap comprising a piston-and-cylinder unit, the piston (12) and cylinder (10) of which can be operated with an axial stroke movement relative to each other in order to draw off and discharge liquid from a bottle on which the dispenser is seated, comprising an adjustable limiter for the maximum stroke of the piston (12) and cylinder (10) relative to each other, comprising an adjusting element (34) for altering the limiter setting, and comprising a digital volume indicator (42) which when the limiter setting is altered is automatically altered therewith proportionally thereto,
**characterised in that**
the limiter (14, 16) and volume indicator (42) can be uncoupled from each other and that in the state in which it is uncoupled from the limiter (14, 16) the volume indicator (42) can be altered without the limiter setting being changed, in order thus to bring the indicated and the actual discharged volumes into agreement.

2. A dispensing bottle cap according to claim 1, **characterised in that** in the state in which it is uncoupled from the limiter (14, 16) the volume indicator (42) can be altered electronically by data input.

3. A dispensing bottle cap according to claim 1 or 2, **characterised in that** the limiter (14, 16) acts mechanically, that the volume indication (42) is effected mechanically, and that a mechanical gear connection (44, 46, 48), which can be uncoupled and coupled again, is present between the limiter (14, 16) and the volume indicator (42).

4. A dispensing bottle cap according to any one of claims 1 to 3, **characterised in that** the limiter (14, 16) comprises an adjustable stop (16) for adjusting the volume, and that, for adjustment, in the uncoupled state of the limiter (14, 16) and the volume indicator (42) the adjustable stop (16) is fixed whilst the volume indicator (42) can be adjusted independently.

5. A dispensing bottle cap according to claim 4, **characterised in that** a rotary knob (34) on which a toothed ring (52) is disposed is provided for adjusting the volume, that the volume indicator (42) is situated behind a closure (50) which has to be opened for adjustment, and that when the closure (50) is opened a lug (54) or the like seated thereon moves into the toothed ring (52) and locks the rotary knob (34).

6. A dispensing bottle cap according to claim 3 and claim 4 or 5 if applicable, **characterised in that** the volume indicator (42) is designed as a counter, the counter shaft (46) of which is coupled via a bevel gear pair (44, 48) to a threaded spindle (20) which is subjected to a rotation proportional to the limiter adjustment, and that the counter shaft (46) locks the bevel gears (44, 48) in their engaged position by a removable distance piece (56) and after removing the distance piece (56) can be moved out of engagement with the bevel gears (44, 48) and can be rotated by an adjusting knob (62).

7. A dispensing bottle cap according to any one of claims 1 to 6, **characterised in that** a seal (58) is provided which is broken on the first adjustment.

8. A dispensing bottle cap according claim 7, **characterised in that** after the seal (58) is broken a conspicuous mark in the volume indicator (42) becomes visible.

9. A dispensing bottle cap according to claims 6 to 8, **characterised in that** the distance piece (56) is secured by a plastics strip (58) which is torn off when the distance piece (56) is first removed and allows the mark to become visible.

10. A dispensing bottle cap according to claim 9, **characterised in that** the plastics strip (58) is situated in the volume indicator (42) in front of the distance piece (56) and covers the latter, and after it is torn off allows the distance piece (56) itself to become visible as the mark.

## Revendications

1. Distributeur adaptable sur une bouteille comportant un ensemble piston-cylindre, dont le piston (12) et le cylindre (10) peuvent être actionnés l'un par rapport à l'autre en une course axiale pour aspirer et délivrer du liquide contenu dans une bouteille sur laquelle le distributeur est monté, un limiteur réglable de la course maximale du piston (12) et du cylindre (10) l'un par rapport à l'autre, un élément de réglage (34) pour modifier le réglage du limiteur de course et un indicateur de volume (42) numérique qui, lors d'une modification du réglage du limiteur de course, est automatiquement modifié de manière proportionnelle, **caractérisé par le fait que** le limiteur de course (14, 16) et l'indicateur de volume (42) peuvent découplés l'un de l'autre et que l'indicateur de volume (42), dans son état découplé du limiteur de course (14, 16) peut être modifié sans que le réglage du limiteur de course change afin d'amener le volume affiché en accord avec le volume effectivement délivré.

2. Distributeur adaptable sur une bouteille selon la revendication 1, **caractérisé par le fait que** l'indicateur de volume (42) dans son état découplé du limiteur de course (14, 16) peut être modifié par voie électronique par entrée de données.

3. Distributeur adaptable sur une bouteille selon la revendication 1 ou 2, **caractérisé par le fait que** le limiteur de course (14, 16) agit mécaniquement, que l'indicateur de volume (42) agit mécaniquement, et qu'entre le limiteur de course (14, 16) et l'indicateur de volume (42) est prévue une transmission mécanique (44, 46, 48) découplable et recouplable.

4. Distributeur adaptable sur une bouteille selon une des revendications 1 à 3, **caractérisé par le fait que** le limiteur de course (14, 16) présente une butée réglable (16) pour le réglage du volume et que, pour le réglage à l'état découplé du limiteur de course (14, 16) et de l'indicateur de volume (42), la butée réglable (16) est maintenue fixe tandis que l'indicateur de volume (42) peut être réglé de manière indépendante.

5. Distributeur adaptable sur une bouteille selon la revendication 4, **caractérisé par le fait qu'**il est prévu, pour le réglage du volume, un bouton tournant (34) sur lequel est aménagée une couronne dentée (52), que l'indicateur de volume (42) est placé derrière un volet (50) que l'on doit ouvrir pour le réglage et que, lors de l'ouverture du volet (50), un doigt (54) ou similaire prévu sur celui-ci s'engage dans la couronne dentée (52) et bloque le bouton tournant (34).

6. Distributeur adaptable sur une bouteille selon la revendication 3, **caractérisé par le fait que** l'indicateur de volume (42) est conformé en compteur, dont l'axe de compteur (46) est couplé par l'intermédiaire d'un engrenage conique (44, 48) à une vis qui est soumise à une rotation proportionnelle au réglage du limiteur de course, et que l'axe de compteur (46), par l'intermédiaire d'un élément d'écartement (56) mobile, bloque le pignon conique (44, 48) en prise et, après éloignement de l'élément d'écartement (56), peut être déplacé dans une position hors de prise des pignons coniques (44, 48) et tourné à l'aide d'un bouton de réglage (62).

7. Distributeur adaptable sur une bouteille selon une des revendications 1 à 6, **caractérisé par le fait qu'**il est prévu un sceau de plomb (58) qui doit être rompu pour le premier réglage.

8. Distributeur adaptable sur une bouteille selon la revendication 7, **caractérisé par le fait qu'**après rupture du sceau de plomb (58), une marque visible apparaît dans l'indicateur de volume (42).

9. Distributeur adaptable sur une bouteille selon les revendications 6 à 8, **caractérisé par le fait que** l'élément d'écartement (56) est bloqué par une bande de matière plastique (58), qui doit être arrachée pour le premier déplacement de l'élément d'écartement (56) et laisse apparaître la marque.

10. Distributeur adaptable sur une bouteille selon la revendication 9, **caractérisé par le fait que** la bande de matière plastique (58) dans l'indicateur de volume (42) est placée devant l'élément d'écartement (56) et masque celui-ci et, après arrachement laisse apparaître l'élément d'écartement (56) lui-même comme marque.
